# EUROPÄISCHE PATENTSCHRIFT

(11) **EP 4 467 408 B1**
(45) Veröffentlichungstag und Bekanntmachung des Hinweises auf die Patenterteilung: **10.09.2025**
(21) Anmeldenummer: 24176061.0
(22) Anmeldetag: 15.05.2024
(51) Int. Cl.: B60W 30/16, B60W 30/18, B60W 60/00, B60W 10/04, B60W 10/20, B60W 30/12

(54) **VERFAHREN ZUM DURCHFÜHREN EINES AUTOMATISIERTEN SPURWECHSELMANÖVERS FÜR EIN KRAFTFAHRZEUG UND KRAFTFAHRZEUG**
METHOD FOR PERFORMING AN AUTOMATED LANE CHANGING MANEUVER FOR A MOTOR VEHICLE AND MOTOR VEHICLE
PROCÉDÉ DE RÉALISATION D'UNE MANOEUVRE DE CHANGEMENT DE VOIE AUTOMATISÉE POUR UN VÉHICULE AUTOMOBILE ET VÉHICULE AUTOMOBILE

(30) Priorität: 26.05.2023 DE 102023113984
(43) Veröffentlichungstag der Anmeldung: 27.11.2024
(73) Patentinhaber: VOLKSWAGEN AG, 38440 Wolfsburg (DE); CARIAD SE, 38440 Wolfsburg (DE)
(72) Erfinder: Hoppe, Jannis, 38440 Wolfsburg (DE); Halbroth, Dominic, 85080 Gaimersheim (DE); Stark, Michael, 38440 Wolfsburg (DE)
(74) Vertreter: Hofstetter, Schurack & Partner

(56) Entgegenhaltungen:
- DE-A1- 102016 122 611
- DE-A1- 102020 214 865
- US-A1- 2017 369 067

## Beschreibung

Die Erfindung betrifft ein Verfahren zum zumindest teilweise automatisierten Durchführen eines Spurwechselmanövers für ein oder mittels einem Kraftfahrzeug. Des Weiteren betrifft die Erfindung auch ein Kraftfahrzeug mit entsprechenden Querführungsmodul zum Durchführen eines entsprechenden Spurwechselmanövers.

Es gibt Kraftfahrzeuge, bei denen mittels eines querführenden Fahrerassistenzsystems automatisiert oder assistiert, also ohne Zutun eines Fahrers, ein Spurwechsel durchgeführt werden kann. Das Fahrerassistenzsystem wird zum Beispiel als Spurwechselassistent bezeichnet. Der Spurwechselassistent umfasst für das Durchführen des Spurwechsels zum Beispiel ein Querführungsmodul, welches den zugeordneten Fahreingriff, wie beispielsweise ein Lenken und/oder Beschleunigen, entsprechend einleiten und durchführen kann. Durch Ansteuern von entsprechenden Fahrzeugaktoren kann das Kraftfahrzeug selbstständig, vorzugsweise automatisiert oder assistiert die Fahrspur wechseln.

Diese Art des Spurwechsels ist eine automatische Lenkfunktion (ACSF: Automatically Commanded Steering Function) der Kategorie C, die zum Beispiel in Europa gesetzlich reguliert ist und zudem produkthaftungstechnischen Betrachtungen unterliegt. Dabei müssen zum Beispiel aufgrund der gesetzlichen Vorgaben Sicherheitsabstände zu Vorderfahrzeugen und zum rückwärtigen Verkehr, also fremden Fahrzeugen in der Umgebung des Kraftfahrzeugs (Ego-Fahrzeug), eingehalten werden. Sollte ein entsprechender Sicherheitsabstand bei einem assistierten Spurwechsel nicht eingehalten werden können, wird die Spurwechselprozedur unterdrückt oder abgebrochen. Entsprechende Spurwechselassistenten sind aus dem Stand der Technik an sich bekannt.

Zum Beispiel offenbart die DE 10 2017 208 473 A1 eine Steuereinheit zur zumindest teilweise automatisierten Querführung eines Fahrzeugs. Dabei soll in Reaktion auf das Vorliegen ein Abbruchbedingung für den Spurwechsel, eine Abbruchtrajektorie ermittelt werden, um das Fahrzeug passend zu einer Fahrspur auszurichten.

Die US 2022/0073076 A1 offenbart ein Verfahren zum Simulieren einer Spurwechseltrajektorie für ein Fahrzeug. Dabei wird der umliegende Straßenverkehr berücksichtigt.

Die CN 114475596 A offenbart ein Verfahren zum Absichern eines Spurwechselmanövers.

Dabei wird eine Reihenfolge von Fahrzeugen in einer Schlange für den Spurwechsel berücksichtigt.

Weitere Verfahren zum automatisierten Durchführen eines Spurwechsels sind aus der DE 10 2016 122611 A1 und aus der DE 10 2020 214865 A1 bekannt.

Nachteilig bei den Spurwechselassistenten aus dem Stand der Technik ist, dass das automatisierte Spurwechselmanöver beim Nichteinhalten des Sicherheitsabstands abgebrochen wird und dabei zum Beispiel der Fahrer die Lenkung übernehmen muss. Die führt zu einem geringeren Kundennutzen, sowie einem reduzierten Vertrauen in die Funktion. Außerdem ist der Spurwechselassistent in bestimmten Situationen nicht verfügbar. Es ist die Aufgabe der vorliegenden Erfindung, die Verfügbarkeit automatisierten oder assistieren Spurwechselmanövers in einem Kraftfahrzeug zu erhöhen.

Die Aufgabe wird durch den Gegenstand der unabhängigen Patentansprüche gelöst. Vorteilhafte Weiterbildungen der Erfindung sind durch die abhängigen Patentansprüche, die Beschreibung sowie die Figuren offenbart.

Die Erfindung basiert auf der Erkenntnis, dass bisher beim Durchführen eines (teil)automatisierten Spurwechselmanövers die Sicherheitsabstände zum Beispiel zu anderen Verkehrsteilnehmern unabhängig vom Status eines potentiell aktiven längsführenden Fahrerassistenzsystems, also zum Beispiel einem Längsführungsmodul des Kraftfahrzeugs, errechnet wird. Ein solches Längsführungsmodul wird heute zum Beispiel in Fahrerassistenzsystemen eingesetzt, um zum Beispiel assistiert oder automatisiert die Längsführung des Kraftfahrzeugs zu übernehmen. Dabei geht es zum Beispiel darum den Abstand zu Fremdfahrzeugen oder eine gewünschte Fahrgeschwindigkeit zu halten. Um abrupte Beschleunigungs- oder Bremsmanöver bei der Längsführung zu vermeiden, gibt es längsführende Systeme die eine Verzögerung in der Reaktion implementieren. Dadurch kann es zum Beispiel vorkommen, dass zumindest kurzzeitig ein vorgegebener Soll-Abstand zu einem vorausfahrenden Fremdfahrzeug unterschritten (eindippen) oder überschritten wird. Bei querführenden Systemen gibt es diesen variablen oder dynamischen Sicherheitsabstand bisher nicht. Beim Spurwechsel wird deshalb bei herkömmlichen Spurwechselassistenten immer der Soll-Abstand, der zum Beispiel gesetzlich vorgegeben ist, eingehalten.

Dazu können Sicherheitsabstände beim Spurwechsel abhängig vom Status eines potentiell aktiven längsführenden Systems bestimmt werden. Insbesondere wird hierzu ein Längsregelobjekt, also ein Zielobjekt für die Längsregelung auch bei der Querregelung oder Querführung für den Sicherheitsabstand beim assistierten Spurwechsel berücksichtigt. Dabei wird ausgenutzt, dass bei Verwendung eines Fahrerassistenzsystems viel schneller bei Bedarf auf veränderte Umgebungsumstände reagiert werden kann als es zum Beispiel durch einen menschlichen Fahrer möglich ist. So kann zum Beispiel ein entsprechender Sicherheitsabstand zu einem vorausfahrenden oder nachfahrenden Fremdfahrzeug reduziert werden, ohne dass es zu wesentlichen Sicherheitseinbußen in der Fahrzeugführung oder im Straßenverkehr kommt.

Hierzu schlägt die Erfindung gemäß einem Aspekt ein Verfahren zum zumindest teilweise automatisierten Durchführen eines Spurwechselmanövers für ein oder mittels einem Kraftfahrzeug vor. Vorliegend kann das Spurwechselmanöver zum Beispiel einen Spurwechsel oder einen Fahrstreifenwechsel umfassen. Das Spurwechselmanöver kann zusätzlich oder alternativ weitere Fahrmanöver, die mit dem Spurwechsel verknüpft sind umfassen. Dazu kann zum Beispiel ein Beschleunigen auf der Ausgangsspur oder Ego-Fahrspur gehören.

In dem Verfahren wird zunächst ein erster Sicherheitsabstand des Kraftfahrzeugs, das im Folgenden auch als Ego-Fahrzeug bezeichnet wird, relativ zu einem für das Spurwechselmanöver relevanten Zielobjekt, also beispielsweise einem Fremdfahrzeug, basierend auf Querführungsdaten eines Querführungsmoduls des Kraftfahrzeugs ermittelt oder bestimmt. Die Berechnung des jeweiligen Sicherheitsabstands erfolgt vorzugsweise auf Basis der Querführungsdaten nach Standardmethoden, wie sie für einen Spurwechsel aus dem Stand der Technik an sich bekannt sind.

Anschließend wird in dem Verfahren ein Aktivierungszustand eines Längsführungsmoduls des Kraftfahrzeugs ermittelt oder bestimmt. Der Aktivierungszustand gibt an, dass das Längsführungsmodul zum zumindest teilweise automatisierten Durchführen eines Längsführungsmanövers des Kraftfahrzeugs aktiviert ist oder verwendet wird. Das heißt, durch den Aktivierungszustand ist bekannt, ob im Kraftfahrzeug ein das Längsführungsmodul implementiert und/oder eingeschaltet ist. Als aktiviert wird das Längsführungsmodul vorliegend insbesondere dann angesehen, wenn mittels des Längsführungsmoduls Fahrmanöver betreffend die Längsführung durchgeführt werden, also zum Beispiel ein Abstand oder eine Fahrzeuggeschwindigkeit zumindest teilweise automatisiert eingestellt oder vorgegeben wird.

Des Weiteren wird in dem Verfahren zumindest ein Regelparameter ermittelt oder bestimmt, welcher angibt, dass das Längsführungsmodul das Zielobjekt für das Längsführungsmanöver berücksichtigt. Das heißt, es wird geprüft, ob die Längsführung auf das Zielobjekt einregelt. Bei dem jeweiligen Regelparameter handelt es sich somit um ein Attribut oder einen Zustand, der angibt, ob das Zielobjekt vorhanden ist und als Zielobjekt für die Längsführung verwendet wird.

Nur dann, wenn der Aktivierungszustand und der Regelparameter vorliegen, also das Längsführungsmodul aktiv ist, und das Zielobjekt von dem Längsführungsmodul erfasst ist, wird in dem Verfahren ein zweiter Sicherheitsabstand des Kraftfahrzeugs relativ zu dem Zielobjekt ermittelt oder bestimmt. Der zweite Sicherheitsabstand ist dabei von dem ersten Sicherheitsabstand um einen vorbestimmten Grenzbetrag verschieden. Das heißt, der zweite Sicherheitsabstand ist zum Beispiel um den Grenzbetrag reduziert oder vergrößert. Das Durchführen des Spurwechselmanövers erfolgt mittels des Querführungsmoduls in dem Verfahren dann unter Einhaltung des zweiten Sicherheitsabstands zu dem Zielobjekt.

Liegen der Aktivierungszustand und/oder der Regelparameter hingegen nicht vor, wird vorzugsweise der erste Sicherheitsabstand für das Spurwechselmanöver berücksichtigt. Das ist zum Beispiel der Fall, wenn das Längsführungsmodul deaktiviert ist. Das Durchführen des Spurwechselmanövers erfolgt somit unter Einhaltung des ersten Sicherheitsabstands zu dem Zielobjekt mittels des Querführungsmoduls.

Somit wird der Status des längsführenden Systems und insbesondere das derzeit aktive Regelobjekt (Zielobjekt) das für die Längsregelung aktiv ist, in die Bewertung des Umfelds und des Sicherheitsabstands miteinbezogen. Mit anderen Worten erfolgt die Berechnung eines Soll-Abstands oder Sicherheitsabstands zu dem Zielobjekt beim Spurwechsel abhängig davon, ob die Längsführung aktiviert oder deaktiviert ist. Ist die Längsführung aktiv und regelt auf das Zielobjekt ein, kann ein anderer Sicherheitsabstand (zweiter Sicherheitsabstand) berücksichtigt werden als wenn die Längsführung deaktiviert ist. Wenn die Längsführung deaktiviert ist, wird insbesondere der reguläre Sicherheitsabstand (erster Sicherheitsabstand) eingehalten oder eingeregelt.

Hierdurch ergibt sich der Vorteil, dass der Sicherheitsabstand dynamisch an die jeweilige Verkehrssituation angepasst werden kann. Dadurch kann das Fahrverhalten eines menschlichen Fahrers mittels des Querführungsmoduls insbesondre beim Spurwechsel nachgebildet oder nachempfunden werden. Für einen Insassen im Kraftfahrzeug ergibt sich somit beim assistierten oder automatisierten Fahren ein erhöhter Nutzerkomfort. Zudem kann dadurch vermieden werden, dass ein assistierter Spurwechsel regelmäßig abgebrochen wird, wenn zum Beispiel der reguläre Sicherheitsabstand nicht eingehalten werden kann. So kann die Verfügbarkeit des assistierten Spurwechsels erhöht und dadurch das Vertrauen in die Spurwechselfunktion im Kraftfahrzeug gestärkt werden.

Der jeweilige Sicherheitsabstand ist bevorzugt durch gesetzliche Vorgaben oder eine vorgegebene interne oder externe Vorschrift beschränkt oder bestimmt. Zum Beispiel gibt es in Europa die sogenannte UN/ECE-Regelung Nr. 79, die Bestimmungen oder Normen für automatische Lenkfunktionen enthält. Des Weiteren können zum Beispiel vom Hersteller produkthaftungstechnische Betrachtungen als Vorschrift für den jeweiligen Sicherheitsabstand berücksichtigt werden.

Das Längsführungsmodul und das Querführungsmodul können zum Beispiel von einem jeweiligen elektronischen Fahrzeugführungssystem oder Fahrerassistenzsystem des Kraftfahrzeugs umfasst sein. Unter einem elektronischen Fahrzeugführungssystem kann ein elektronisches System verstanden werden, das dazu eingerichtet ist, ein Fahrzeug einerseits vollautomatisch oder vollautonom oder andererseits teilautomatisch oder assistiert zu führen, insbesondere ohne dass ein Eingriff in eine Steuerung durch einen menschlichen Fahrer erforderlich ist. Das Fahrzeug führt alle erforderlichen Funktionen, insbesondere Fahrmanöver, wie zum Beispiel Lenk-, Brems- und/oder Beschleunigungsmanöver, die Beobachtung und Erfassung des Straßenverkehrs sowie entsprechende Reaktionen zumindest teilweise automatisch durch. Der Automatisierungsgrad ist zum Beispiel durch die Norm SAE J3016 in jeweiligen Stufen oder in Leveln vorgegeben. Zum Beispiel erfolgt das jeweilige Fahrmanöver (Längsführungsmanöver oder Spurwechselmanöver) assistiert, wenn das elektronische Fahrzeugführungssystem in Level 1 oder Level 2 klassifiziert ist. Im Gegensatz dazu wird das jeweilige Fahrmanöver automatisiert durchgeführt, wenn das elektronische Fahrzeugführungssystem in Stufe 3 oder höher klassifiziert ist. Im Folgenden wird zur Vereinfachung der Begriff "automatisiert" verwendet, wobei hierunter auch das assistierte Führen fällt.

Unter einer Querführung werden vorliegend insbesondere querführende Fahrmanöver verstanden. Diese betreffen insbesondere Fahrzeugbewegungen senkrecht oder quer zu einer Fahrtrichtung der Kraftfahrzeugs (Lenken). Das Querführungsmodul kann zusätzlich oder alternativ zu dem Spurwechselmanöver andere querführende Fahrmanöver durchführen. Zum Beispiel kann das Querführungsmodul bei Ausweichmanövern und/oder Abbiegemanövern und/oder Einparkmanövern unterstützen. Unter einer Längsführung werden vorliegend insbesondere längsführende Fahrmanöver verstanden. Diese betreffen insbesondere Fahrzeugbewegungen parallel zur oder in Richtung der Fahrtrichtung (Abbremsen, Beschleunigen). Dazu gehören zum Beispiel Manöver zum Abbremsen, Beschleunigen oder Halten der Fahrzeuggeschwindigkeit.

Das Berechnen und/oder Ermitteln des jeweiligen Fahrmanövers erfolgt vorzugsweise nach Standardmethoden, die aus dem Stand der Technik an sich bekannt sind. Zum Beispiel werden hierzu die Querführungsdaten beziehungsweise Längsführungsdaten vom jeweiligen Modul herangezogen. Dabei umfassen die Querführungsdaten und Längsführungsdaten zum Beispiel Attribute und Kriterien, die angeben, wann und ob die Querführung oder die Längsführung erlaubt ist oder durchgeführt werden kann. Zum Beispiel umfassen die Querführungsdaten und Längsführungsdaten Ergebnisse einer Umgebungsanalyse oder Umfeldbeobachtung des Ego-Fahrzeugs. Vorzugsweise umfassen die Querführungsdaten und Längsführungsdaten eine Position eines Fremdobjekts oder Zielobjekts, wie einem Fremdfahrzeug relativ zum Ego-Fahrzeug, einen Objekttyp (Fahrzeugtyp, Fahrspur) und/oder Objektzustand (Geschwindigkeit, Dimensionen). Des Weiteren können die Querführungsdaten und Längsführungsdaten Fahrzeugdaten zu dem Egofahrzeug umfassen, wie beispielsweise eine Fahrgeschwindigkeit oder die Dimensionen. Bevorzugt werden in der Berechnung zum Beispiel Anti-Flacker-Maßnahmen für Objekte im Grenzbereich berücksichtigt.

Im Längsführungsmodul ist für die Umsetzung einer Längsführung beispielsweise eine Steuerlogik oder Entscheidungslogik implementiert. Diese kann bei Betätigung eines Blinkers (Fahrtrichtungsanzeiger) des Ego-Fahrzeugs im längsgeführten Betrieb anhand eines Algorithmus ermitteln, ob auf ein vorausfahrendes Fahrzeug in der Egospur der Abstand eingeregelt werden soll oder auf ein Fahrzeug, welches sich auf der Zielspur bewegt (Auswählen des Zielobjekts). Nach Auswertung der Logik wird für eine feste Zeit auf das entsprechende Fahrzeug geregelt, solange keine als kritisch bewertete Situation hinsichtlich des Fahrzeugs auf der Egospur (Spur auf der das Ego Fahrzeug fährt) vorliegt. Im Querführungsmodul ist für die Umsetzung einer Querführung beispielsweise eine anloge Steuerlogik oder Entscheidungslogik implementiert, um den automatisierten Spurwechsel auszuführen.

Um das ermittelte Fahrmanöver in eine Fahrzeugbewegung umzusetzen können mittels des Querführungsmoduls beziehungsweise des Längsführungsmoduls zum Beispiel zugeordnete Fahrzeugaktoren angesteuert werden. Dazu gehört zum Beispiel ein Antrieb oder Antriebsstrang, eine Lenkanlage und/oder eine Bremsanlage. Durch das Ansteuern führt das Ego-Fahrzeug den Spurwechsel (oder das jeweils gewünschte Fahrmanöver) automatisiert durch. Das heißt, es wird eine Fahrzeugbewegung von der Ausgangsspur auf die Zielspur ausgeführt.

Zu der Erfindung gehören Ausführungsformen, durch die sich zusätzliche Vorteile ergeben.

Gemäß einer Ausführungsform wird ein Spurwechselstatus des Querführungsmoduls ermittelt. Der Spurwechselstatus gibt an, dass innerhalb eines vorzugsweise unmittelbar vorangegangenen, vorbestimmten Zeitintervalls ein Durchführen des Spurwechselmanövers unter Einhaltung des ersten Sicherheitsabstands zu dem Zielobjekt mittels des Querführungsmoduls eingeleitet oder gestartet wurde. Der zweite Sicherheitsabstand wird zusätzlich nur dann ermittelt, wenn der Spurwechselstatus vorliegt. Entsprechend wird somit auch nur dann, wenn der Spurwechselstatus vorliegt, der Spurwechsel unter Einhaltung des zweiten Sicherheitsabstands durchgeführt. Ansonsten, falls zum Beispiel das Zeitintervall überschritten ist, wird der Spurwechsel abgebrochen.

Hierdurch ergibt sich der Vorteil, dass auch ein bereits eingeleiteter Spurwechsel bei Unterschreiten des regulären Sicherheitsabstands noch weiter durchgeführt werden kann. Ein Spurwechselmanöver braucht somit nicht mitten im Spurwechsel abgebrochen zu werden. Das vorbestimmte Zeitintervall kann zum Beispiel 1 bis 5 Sekunden betragen. Dieses Zeitintervall dient der Entprellung. Dadurch wird dem Längsführungsmodul eine Entscheidungszeit gewährt, um zum Beispiel ein Zielobjekt auf der Zielspur als Regelobjekt auszuwählen (Regelparameter liegt vor), auch wenn der Spurwechsel bereits ausgeführt wird.

Gemäß einer Ausführungsform wird eine Eintrittswahrscheinlichkeit des Zielobjekts in den zweiten Sicherheitsabstand ermittelt. Das Spurwechselmanöver wird unter Einhaltung des zweiten Sicherheitsabstands nur dann durchgeführt, wenn die Eintrittswahrscheinlichkeit einen vorgegebenen Grenzwert unterschreitet. Anders ausgedrückt, wird das Spurwechselmanöver abgebrochen oder beendet, wenn anhand der Eintrittswahrscheinlichkeit ermittelt wird, dass das Zielobjekt während des Spurwechselmanövers voraussichtlich innerhalb des zweiten Sicherheitsabstands eintritt oder sich dort aufhält. Vorzugsweise liegt der Grenzwert bei höchstens 10%,. Insbesondere höchstens bei 5%. So kann sichergestellt werden, dass nur dann die Fahrspur gewechselt wird, wenn mit einer Wahrscheinlichkeit von 10% oder weniger das Eintreten des Zielobjekts in den zweiten Sicherheitsabstand vorhergesagt oder ermittelt werden kann. Hierdurch kann sichergestellt werden, dass im Bedarfsfall zum Beispiel noch rechtzeitig ein Abbremsen des Kraftfahrzeugs möglich ist, bevor es zu einer Kollision mit dem Zielobjekt kommt.

Gemäß einer Ausführungsform wird ein Übersteuerungszustand des Längsführungsmoduls ermittelt, welcher angibt, dass ein Passagier des Kraftfahrzeugs durch einen Fahreingriff die Durchführung des Längsführungsmanövers mittels des Längsführungsmoduls zumindest teilweise übersteuert oder übertritt. Das Durchführen des Spurwechselmanövers unter Einhaltung des zweiten Sicherheitsabstands wird dann verhindert, wenn der Übersteuerungszustand vorliegt. Somit wird das Spurwechselmanöver in diesem Fall abgebrochen oder nicht freigegeben. Liegt hingegen der Übersteuerungszustand nicht vor, wird das Spurwechselmanöver wie zuvor beschreiben durchgeführt.

Ein Fahrereingriff liegt zum Beispiel dann vor, wenn ein Passagier, also zum Beispiel ein Insasse oder Fahrer des Kraftfahrzeugs, in die (längsgeführte) Steuerung des Kraftfahrzeugs eingreift. Das passiert zum Beispiel im sogenannten Übertreten, also wenn der Fahrer selbst Gas gibt. Dann wird das automatisierte Längsführungsmanöver unterbrochen oder pausiert.

Gemäß einer Ausführungsform ist der zweite Sicherheitsabstand im Vergleich zum ersten Sicherheitsabstand um einen vorbestimmen Grenzbetrag reduziert. Das heißt, der zweite Sicherheitsabstand ist kleiner gewählt als der erste Sicherheitsabstand. So kann beim Spurwechsel zum Beispiel näher an ein vorausfahrendes Fremdfahrzeug auf der Fremdspur oder Zielspur herangefahren werden, ohne dass das Spurwechselmanöver abgebrochen wird. Vorzugsweise ist der zweite Sicherheitsabstand um mindestens 10% oder 20% oder 50% reduziert im Vergleich zum ersten Sicherheitsabstand.

In diesem Zusammenhang wird gemäß einer Ausführungsform beim Ermitteln des zweiten Sicherheitsabstands ein vorgegebener Notbremsabstand zum Zielobjekt für das Durchführen des Längsführungsmanöver berücksichtigt. Der Notbremsabstand gibt dabei einen Abstand zum Zielobjekt an, der mindestens notwendig ist, damit ein Notbremsmodul des Kraftfahrzeugs mittels Notbremsmanöver eine Kollision mit dem Zielobjekt noch verhindern kann. Das Notbremsmanöver wird dabei vorzugsweise vollständig automatisiert oder autonom durchgeführt. Alternativ oder zusätzlich ist zum Beispiel eine assistierte Durchführung mit einer Unterstützung durch den Passagier möglich.

Insbesondere ergeben sich somit drei Abstandsbereiche für das Spurwechselmanöver. Dabei ist der Notbremsabstand zum Zielobjekt kleiner als der zweite Sicherheitsabstand, und der zweite Sicherheitsabstand ist kleiner als der erste Sicherheitsabstand. Der zweite Sicherheitsabstand ist dabei ein durch einen Abstandsbereich mit einem Minimalwert und einem Maximalwert vorgegeben, wobei der Minimalwert der Notbremsabstand und der Maximalwert der erste Sicherheitsabstand ist.

Zusätzlich oder alternativ kann der zweite Sicherheitsabstand zum Beispiel basierend auf Komfortdaten für ein Bremsmanöver mittels des Kraftfahrzeugs ermittelt oder berechnet werden. In den Komfortdaten kann zum Beispiel eine vorgegebene maximale Bremsstärke berücksichtigt werden, durch die ein Wohlbefinden des Passagiers beim Abbremsen möglich wenig beeinträchtigt wird. Die maximale Bremsstärke kann zum Beispiel durch Testversuche oder ein Rechenmodell ermittelt werden. Vorzugsweise kann der zweite Sicherheitsabstand dann so gewählt werden, dass beim Durchführen eines Bremsmanövers mit der maximalen Bremsstärke eine Kollision mit dem Zielobjekt gerade noch verhindert werden kann.

Gemäß einer Ausführungsform handelt es sich bei dem Zielobjekt um ein Fremdfahrzeug auf einer Zielfahrspur, auf die das Kraftfahrzeug durch das Durchführen des Spurwechselmanövers gelenkt werden soll. Dabei kann es sich bei dem Fremdfahrzeug zum Beispiel um ein vorausfahrendes oder nachfolgendes Fahrzeug handeln.

Gemäß einer Ausführungsform wird der jeweilige Sicherheitsabstand, also der erste und/oder der zweite Sicherheitsabstand abhängig von einer Fahrzeuggeschwindigkeit des Kraftfahrzeugs und/oder des Zielobjekts festgelegt. Die Fahrzeuggeschwindigkeit kann zum Beispiel von den Querführungsdaten umfasst sein. Die Ermittlung der Fahrzeuggeschwindigkeit kann zum Beispiel nach Standardmethoden erfolgen. Zum Beispiel kann ein Geschwindigkeitssensor des Ego-Fahrzeugs ausgelesen werden. Das Ermitteln der Fahrzeuggeschwindigkeit des Fremdfahrzeugs kann zum Beispiel mittels Radarmessung oder anhand von Bildanalyse aus einem Abbild oder Video des Fremdfahrzeugs in der Umgebung ermittelt werden. Dazu kann das Kraftfahrzeug zum Beispiel eine entsprechende Sensorik aufweisen.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Gemäß einem Aspekt betrifft die Erfindung ein Kraftfahrzeug mit einem Querführungsmodul zumindest zum Durchführen eines Spurwechselmanövers. Zusätzlich oder alternativ kann das Querführungsmodul zum Beispiel auch für andere querführende Manöver, wie zum Beispiel ein Ausweichmanöver oder ein Abbiegemanöver oder ein Einparkmanöver verwendet werden. Des Weiteren umfasst das Kraftfahrzeug ein Längsführungsmodul zum Durchführen eines Längsführungsmanövers. Das Kraftfahrzeug umfasst auch eine Steuerlogik zum Durchführen eines Verfahrens wie es zuvor beschrieben wurde. Das heißt, die Steuerlogik kann dazu ausgebildet sein, zumindest teilweise automatisiert ein Spurwechselmanöver durchzuführen oder einzuleiten. Dazu können mittels der Steuerlogik zum Beispiel entsprechende Fahrzeugmanöver berechnet und entsprechende Fahrzeugaktoren angesteuert werden.

Die Steuerlogik ist vorzugsweise von dem Querführungsmodul umfasst. Zusätzlich oder alternativ kann die Steuerlogik aber zum Beispiel von dem Längsführungsmodul oder einer anderen Fahrzeugkomponente, wie zum Beispiel einer elektronischen Steuereinheit des Kraftfahrzeugs oder einem Bordcomputer, umfasst sein. Die Steuerlogik kann zum Beispiel als Datenverarbeitungsvorrichtung oder Prozessoreinrichtung vorliegen. Die Prozessoreinrichtung kann hierzu zumindest einen Mikroprozessor und zumindest einen Mikrocontroller und/oder zumindest einen FPGA (Field Programmable Gate Array) und/oder zumindest einen DSP (Digital Signal Processor) aufweisen. Des Weiteren kann die Prozessoreinrichtung einen Programmcode aufweisen, der dazu eingerichtet ist, beim Ausführen durch die Prozessoreinrichtung eine Ausführungsform des erfindungsgemäßen Verfahrens durchzuführen. Der Programmcode kann zum Beispiel einen Datenspeicher der Prozessoreinrichtung gespeichert sein. Die Prozessoreinrichtung kann zum Beispiel auf einer Schaltungsplatine und/oder auf zumindest einem SoC (System on Chip) basieren. Das Kraftfahrzeug ist bevorzugt ein Kraftwagen, insbesondere ein Personenkraftwagen oder Lastkraftwagen oder ein Personenbus oder Motorrad.

Gemäß einer Ausführungsform umfasst das Kraftfahrzeug ein Kamerasystem zur Umgebungserfassung und ein Radarsystem zur Umgebungserfassung. Das Kamerasystem umfasst das Querführungsmodul, und das Radarsystem umfasst das Längsführungsmodul. Das Kamerasystem und das Radarsystem können als Umfeldsensorsysteme des Kraftfahrzeugs verstanden werden. Dabei ist das jeweilige Umfeldsensorsystem in der Lage, Sensordaten oder Sensorsignale zu erzeugen, welche eine Umgebung des jeweiligen Systems, insbesondere des Kraftfahrzeugs, abbilden, darstellen oder wiedergeben. Die Sensordaten oder Sensorsignale können in an sich bekannter Weise zum Beispiel mittels Objekterkennung oder Bildanalyse ausgewertet werden, um zum Beispiel das Zielobjekt oder andere Objekte in der Umgebung, wie zum Beispiel Fahrspuren, oder andere Fremdfahrzeuge und/oder deren Zustand zu erkennen. Das Ergebnis dieser Auswertung kann in Form von Längsführungsdaten oder Querführungsdaten an das jeweilige Längsführungs- oder Querführungsmodul übergeben oder bereitgestellt werden.

Das Längsführungsmodul und/oder Querführungsmodul können zum Beispiel in Form von Software oder Hardware umgesetzt sein. Insbesondere kann das jeweilige Modul zum Beispiel aus einer Hardware und einem auf der Hardware implementierten Softwareanteil bestehen. Ein Softwaremodul kann vorliegend als ein Teil eines Softwarecodes verstanden werden, der funktional zu einer Einheit verbunden und kombiniert ist. Ein Softwaremodul kann mehrere Verarbeitungsschritte und/oder Datenstrukturen umfassen oder implementieren. Ein Verfahrensschritt zur Bereitstellung eines Softwaremoduls kann so verstanden werden, dass er die Bereitstellung des entsprechenden Softwarecodes in computerlesbarer Form auf einem computerlesbaren Speichermedium umfasst.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Verfahrens hier nicht noch einmal beschrieben. Die Erfindung umfasst auch die Kombinationen der Merkmale der beschriebenen Ausführungsformen.

Im Folgenden werden Ausführungsbeispiele der Erfindung beschrieben. Hierzu zeigt:
- Fig. 1: eine schematische Darstellung einer Fahrsituation, in der ein Kraftfahrzeug automatisiert ein Spurwechselmanöver durchführt; und
- Fig. 2: ein schematisches Verfahrensablaufdiagramm für ein Verfahren zum zumindest teilweise automatisierten Durchführen des Spurwechselmanövers für das Kraftfahrzeug.

Bei den im Folgenden erläuterten Ausführungsbeispielen handelt es sich um bevorzugte Ausführungsbeispiele der Erfindung. Bei den Ausführungsbeispielen stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsbeispiele auch durch weitere der bereits beschriebenen Merkmale der Erfindung ergänzbar.

In den Figuren sind funktionsgleiche Elemente jeweils mit denselben Bezugszeichen versehen.

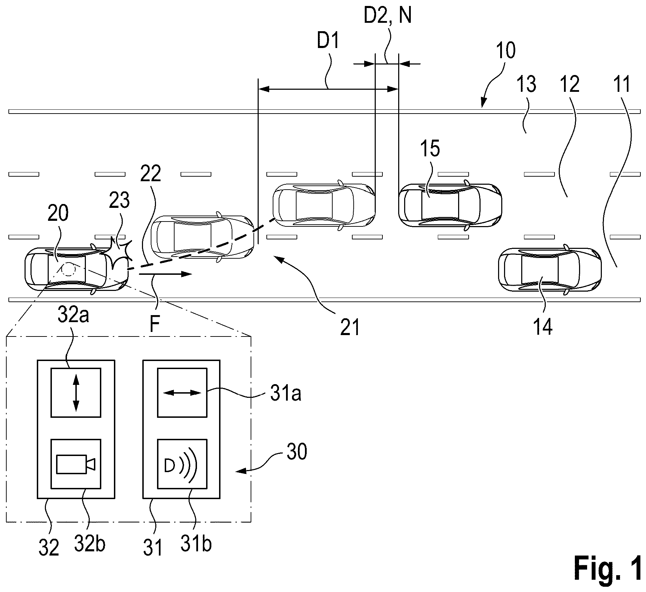

Fig. 1 zeigt in schematischer Darstellung eine Fahrsituation oder eine Verkehrssituation, bei der ein Kraftfahrzeug 20 automatisiert ein Spurwechselmanöver 21 durchführen soll oder durchführt. Dazu ist in Fig. 1 eine Fahrbahn mit drei Fahrspuren dargestellt. Gemäß dem Ausführungsbeispiel in Fig. 1 ist die Fahrbahn zum Beispiel eine Autobahn 10. Die drei Fahrspuren sind eine Ego-Spur 11 oder Ausgangsspur, eine Zielspur 12 und eine weitere Fahrspur 13. Das Kraftfahrzeug 20 befindet sich in der beschrieben Verkehrssituation auf der Ego-Spur 11 und soll mittels des Spurwechselmanövers 21 auf die Zielfahrspur 12 wechseln oder geführt werden. Vorliegend enthält das Spurwechselmanöver 21 beispielhaft den Spurwechsel von der Ego-Spur 11 auf die Zielfahrspur 12. Dazu folgt das Ego-Fahrzeug 20 einer vorgegebenen Trajektorie 22. Neben dem Spurwechsel kann das Spurwechselmanöver 21 zum Beispiel auch ein Beschleunigen oder Abbremsen auf der Ego-Spur 11 und/oder weitere Fahrmanöver, die für den Spurwechsel notwendig oder vorgesehen sind, umfassen.

Sowohl auf der Ego-Spur 11 als auch auf der Zielspur 12 befinden sich andere Kraftfahrzeuge, die vorliegend als Fremdfahrzeuge 14, 15 bezeichnet werden. Die Fremdfahrzeuge befinden sich in einer Fahrtrichtung F vor dem Kraftfahrzeug 20. Im vorliegenden Ausführungsbeispiel sind alle drei Fahrzeuge beispielhaft als Personenkraftwägen dargestellt.

Das Spurwechselmanöver 21 soll zumindest teilweise automatisiert, also assistiert oder automatisiert oder autonom, durchgeführt werden. Dazu umfasst das Ego-Fahrzeug 20 einen Fahrassistenten, der vorliegend als Travel Assist 30 bezeichnet wird. Bei dem Travel Assist 30 handelt es sich um ein elektronisches Fahrzeugführungssystem, mittels welchem das Ego-Fahrzeug 20 vollautomatisch oder teilautomatisch geführt werden kann, insbesondere ohne dass ein Eingriff in eine Steuerung durch einen Fahrer erforderlich ist. Das Ego-Fahrzeug 20 führt alle erforderlichen Funktionen, wie zum Beispiel Lenk-, Brems- und/oder Beschleunigungsmanöver, die Beobachtung und Erfassung des Straßenverkehrs, wie entsprechende Reaktionen, automatisch durch. Dazu umfasst das Travel Assist 30 vorliegend zwei Systeme, mit denen unterschiedliche Fahrmanöver durchgeführt werden können.

Ein System ist ein Radarsystem 31, das vorliegend beispielhaft für Längsführungsmanöver zuständig ist. Ein weiteres System ist ein Kamerasystem 32, das vorliegend beispielhaft für Querführungsmanöver und insbesondere das Spurwechselmanöver 21 zuständig ist. Mit "zuständig" ist hierbei gemeint, dass das jeweilige System alle erforderlichen Berechnungen, Steuerungen und Eingriffe ermittelt und vornimmt, die für das jeweils gewünschte Fahrmanöver notwendig sind. Vorliegend übernimmt das Radie Längsführung, also die Steuerung des Ego-Fahrzeugs 20 in Fahrtrichtung F. Zur Längsführung gehört zum Beispiel das Halten oder Einstellen einer bestimmten oder gewünschten Fahrgeschwindigkeit und/oder das Einregeln eines Abstands zur einem anderen Fahrzeug auf der jeweiligen Ausgangsfahrspur. Das Kamerasystem 32 übernimmt vorliegend die Querführung des Ego-Fahrzeugs 20, das heißt die Steuerung des Ego-Fahrzeugs 20 quer oder senkrecht zur Fahrtrichtung F. Dazu gehört zum Beispiel das Spurwechselmanöver 21 oder andere Fahrzeugmanöver, die in die Lenkung eingreifen.

Zur Beobachtung oder Erfassung der Umgebung des Ego-Fahrzeugs 20 umfassen das Radarsystem 31 und das Kamerasystem 32 einen oder mehrere Umfeldsensoren. Mit den jeweiligen Umfeldsensoren können Sensordaten oder Sensorsignale erzeugt werden, welche die Umgebung des Ego-Fahrzeugs 20 abbilden, darstellen oder wiedergeben. Das Radarsystem 31 umfasst als Umfeldsensor beispielhaft einen Radarsensor 31b, wie er in herkömmlichen Fahrzeugen für die Umfelderfassung eingesetzt wird. Das Kamerasystem 32 umfasst als Umfeldsensor zum Beispiel eine Umgebungskamera 32 b, insbesondere eine Multifunktionskamera, wie sie in herkömmlichen Fahrzeugen für die Umfelderfassung eingesetzt wird. Alternative Beispiele für Umfeldsensoren sind Lidarsensoren oder Ultraschallsensoren. Wie die Umgebungserfassung mit solchen Umfeldsensoren realisiert wird ist an sich bekannt.

Um das jeweilige Fahrmanöver auszuführen, werden die erzeugten Sensordaten in geeigneter, an sich bekannter Weise weiterverarbeitet, zum Beispiel mittels bekannter Bildanalyse- oder Objekterkennungsalgorithmen. Durch die Verarbeitung wird ein jeweiliges Steuersignal zur Steuerung des Ego-Fahrzeugs 20, insbesondere eines entsprechenden Fahrzeugaktors, wie zum Beispiel ein Lenksystem, ein Bremssystem oder ein Antriebssystem, zum Ausführen oder Durchführen des jeweiligen Fahrmanövers zu ermitteln.

Zum Auswerten oder Weiterverarbeiten der Sensordaten der Umgebungskamera 32b umfasst das Kamerasystem 32 ein Querführungsmodul 32a. Analog dazu umfasst das Radarsystem 31 zum Auswerten der Sensordaten des Radarsensors 31b ein Längsführungsmodul 31a. Die Module 31a und 32a können zum Beispiel als Hardware- oder Softwaremodul und/oder als Hardwaremodul mit Softwareanteil realisiert sein. Das jeweilige Modul 31a, 32a kann zum Beispiel eine Entscheidungslogik oder Steuerlogik implementieren oder umfassen, um die notwendigen Berechnungen und/oder die notwendige Steuerung für das jeweilige Fahrmanöver umzusetzen. Die Steuerlogik kann dazu zum Beispiel einen Mikroprozessor oder Mikrocontroller umfassen. Auf den Mikrocontroller kann in Form von Programmcode zum Beispiel ein entsprechender Algorithmus für die Datenverarbeitung und Steuersignalerzeugung implementiert sein.

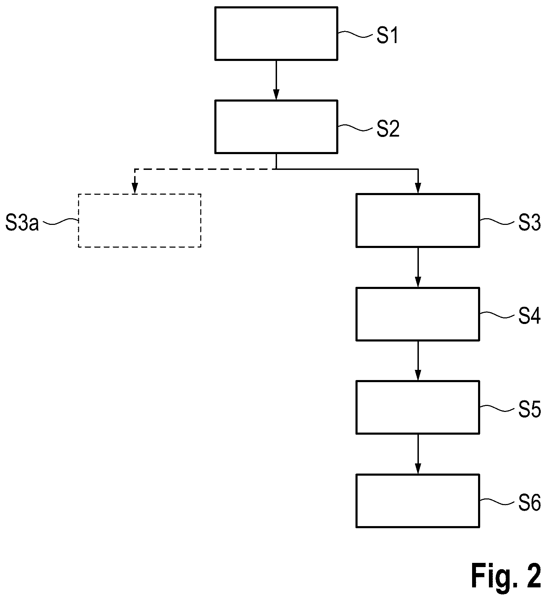

Das (teil-)automatisierte Durchführen eines Spurwechselmanövers 21 unterliegt zum Beispiel in Europa gesetzlichen Vorgaben oder Normen und kann zusätzlich oder alternativ durch herstellerinterne Vorschriften beschränkt sein. Eine Einschränkung besteht zum Beispiel darin, dass zum Beispiel zu Fremdfahrzeugen 14, 15 oder zu anderen Verkehrsteilnehmern in Fahrtrichtung F vor oder hinter dem Ego-Fahrzeug 20 ein vorbestimmter erster Sicherheitsabstand eingehalten werden muss. Das heißt, das Ego-Fahrzeug muss beim oder nach dem Durchführen des jeweiligen Fahrmanövers eine bestimmte Distanz zu dem jeweiligen Verkehrsteilnehmer einhalten. Dieser erste Sicherheitsabstand D1 wird vorliegend auch als Soll-Abstand oder Mindestabstand bezeichnet. Sollte der Soll-Abstand beim Spurwechsel mit dem Travel Assist 30 nicht eingehalten werden können, wird die Spurwechselprozedur in der Regel abgebrochen oder unterdrückt, also gar nicht erst eingeleitet. Dadurch ist die Verfügbarkeit des (teil-)automatisierten Spurwechsels reduziert und Kunden verlieren zum Beispiel das Vertrauen in die Funktion. Deshalb ist vorliegend ein Verfahren zum Betreiben des Ego-Fahrzeugs 20 vorgesehen, bei dem Längsregelobjekte für Sicherheitsabstände beim assistierten oder automatisierten Spurwechsel berücksichtigt werden. Das Verfahren kann anhand von Fig. 2 näher beschrieben werden.

Fig. 2 zeigt hierzu ein schematisches Verfahrensablaufdiagramm für ein Verfahren zum zumindest teilweise automatisierten Durchführen des Spurwechselmanövers 21 mit dem Ego-Fahrzeug 20. Das Verfahren wird bevorzugt mittels der Steuerlogik des Querführungsmoduls 32a durchgeführt oder ausgeführt. Es handelt sich somit bevorzugt um ein computerimplementiertes Verfahren. Vorliegend wird das Verfahren beispielhaft anhand der folgenden Situation näher beschrieben: Das Ego-Fahrzeug 20 befindet sich auf der Fahrt auf der Ego-Spur 11, und zwar mit aktivem Travel Assist 30, das heißt, das Längsführungssystem 31 und das Querführungssystem 32 werden für die Steuerung des Ego-Fahrzeugs 20 eingesetzt. Der Fahrer des Ego-Fahrzeugs 20 möchte nun die Spur wechseln, und zwar von der Ego-Spur 11 auf die Zielspur 12. Zum Beispiel geht es darum das Fremdfahrzeug 14 zu überholen. Auf der Zielspur 12 befindet sich das Fremdfahrzeug 15, das von der genutzten Sensorik des Travel Assist 30 erkannt wird und für die Durchführung des Spurwechselmanövers 21 relevant ist. Um das Spurwechselmanöver 21 einzuleiten, aktiviert oder setzt der Fahrer oder zum Beispiel das Querführungsmodul 32a oder Längsführungsmodul 31a zum Beispiel einen Fahrtrichtungsanzeiger oder Blinker 23 des Ego-Fahrzeugs 20. Die Aktivierung des Blinkers 23 initiiert somit den Spurwechsel, der durch Ausführen des nachfolgend beschriebenen Verfahrens durchgeführt werden kann.

In einem Schritt S1 ermittelt das Querführungsmodul 32a, ob sich ein Zielobjekt, also zum Beispiel das Fremdfahrzeug 15 auf der Zielspur 12 befindet. Dazu kann das Querführungsmodul 32a zum Beispiel die Sensorsignale des Radarsensors 32b analysieren oder auswerten. In einem Schritt S2 ermittelt das Querführungsmodul 32a basierend auf Querführungsdaten den Soll-Abstand (ersten Sicherheitsabstand D1) relativ zu dem Fremdfahrzeug 15, der für das Spurwechselmanöver 21 relevant ist. Die Querführungsdaten umfassen zum Beispiel die Ergebnisse der Auswertung der Sensorsignale der Umgebungskamera 32b. Zusätzlich können von den Querführungsdaten zum Beispiel Geschwindigkeitsdaten umfasst sein, die eine Fahrgeschwindigkeit des Ego-Fahrzeugs 20 und des Fremdfahrzeugs 15 umfassen. Anders ausgedrückt, geht es in den Schritten S1 und S2 darum zu erkennen, ob oder dass sich das Fremdfahrzeug 15 auf der Zielspur 12 im Soll-Abstand befindet oder voraussichtlich zum einem kritischen Zielposition während des Spurwechselmanövers 21 in diesen eintreten wird.

Falls der Soll-Abstand beim oder durch das Durchführen des Spurwechselmanövers 21 verletzt werden würde, also das Ego-Fahrzeug 20, wie in Fig. 1 ersichtlich, zum Beispiel in den ersten Sicherheitsabstand D1 eintreten würde, ist in dem Verfahrensablaufdiagramm ein Schritt S3a ein Abbruchszenario dargestellt, wie es mit bisher bekannten herkömmlichen Travel Assists 30 durchgeführt worden wäre. In dem Schritt S3a würde das Querführungsmodul 32a erkennen, dass der assistierte Spurwechsel aufgrund des verletzten Soll-Abstands nicht unterstützt werden kann. Das Spurwechselmanöver 21 würde somit abgebrochen oder gar nicht erst eingeleitet werden. Das heißt, das Querführungsmodul 32a würde zum Beispiel keine Freigabe für den Spurwechsel erteilen.

Mit dem modifizierten Travel Assist 30, wie er im vorliegenden Ausführungsbeispiel beschrieben ist, ist es hingegen möglich, auch andere Sicherheitsabstände als dem Soll-Abstand beim Spurwechselmanöver 21 zu nutzen. Dabei wird in einem Schritt S3 der Aktivierungszustand des Längsführungsmoduls 31a des Ego-Fahrzeugs 20 ermittelt. Der Aktivierungszustand gibt an, dass das Längsführungsmodul 31a zumindest teilweise zum automatisierten Durchführen des jeweiligen Längsführungsmanövers aktiviert ist. In einem Schritt S4 wird dann zumindest ein Regelparameter ermittelt, der angibt, dass das Längsführungsmodul 31a das jeweilige Zielobjekt, hier also das Fremdfahrzeug 15, für das Längsführungsmanöver berücksichtigt. Das heißt, es wird überprüft, ob das Längsführungsmodul 31a das Fremdfahrzeug 15 erfasst hat und aus dieses einregelt.

Wenn das Längsführungsmodul 31a aktiv ist und der Regelparameter vorliegt, also das Fremdfahrzeug 15 als Zielobjekt erfasst ist, wird in einem Schritt S5 ein zweiter Sicherheitsabstand D2, vorliegend insbesondere ein reduzierter Abstand relativ zu dem Fremdfahrzeug 15 ermittelt. Der Sicherheitsabstand D2 ist dabei um einen vorbestimmten Grenzbetrag kleiner zu dem Sicherheitsabstand D1. Insbesondere ist der Sicherheitsabstand D2 um 50% reduziert im Vergleich zum Sicherheitsabstand D1. Im vorliegenden Ausführungsbeispiel handelt es sich bei dem reduzierten Sicherheitsabstand D2 vorzugsweise um einen Notbremsabstand N. Mit dem Notbremsabstand N ist ein Abstand gemeint, der gerade ausreicht, damit ein Notbremsassistent (in Fig. 1 nicht dargestellt) des Ego-Fahrzeugs 20 automatisiert oder assistiert eine Notbremsung durchführen kann und dabei so vor dem Fremdfahrzeug 15 zum Stillstand kommt, dass eine Kollision vermieden werden kann.

In einem Schritt S6 wird schließlich das Spurwechselmanöver 21 unter Einhaltung des reduzierten Sicherheitsabstands D2 mittels des Querführungsmoduls 32a durchgeführt oder ausgeführt oder freigegeben. Liegen der Aktivierungszustand und der Regelparameter hingegen nicht vor, wird das Spurwechselmanöver 21 nicht freigegeben oder abgebrochen.

Anders ausgedrückt, erkennt das Kamerasystem 32, dass sich das Fremdfahrzeug 15 auf der Zielspur 12 im ersten Sicherheitsabstand D1 befindet oder voraussichtlich zu einem kritischen Zeitpunkt während der Spurwechselprozedur in diesen eintreten wird. Des Weiteren erkennt das Kamerasystem 32, dass sich das Fremdfahrzeug 15 auf der Zielspur 12 nicht im Sicherheitsabstand D2 befindet oder voraussichtlich zu einem kritischen Zeitpunkt während der Spurwechselprozedur in diesen eintreten wird. Bevorzugt sollte eine Eintrittswahrscheinlichkeit, dass das Fremdfahrzeug 15 in den reduzierten Sicherheitsabstand D2 eintritt, weniger als 10% betragen. Falls das System nun Erkennt, dass die Längsführung aktiv ist und auf das Fremdfahrzeug 15 einregelt, wird daraufhin die Freigabe zum assistierten Spurwechsel erteilt.

Zusätzlich können zum Beispiel noch weitere Bedingungen von dem Querführungsmodul 32a berücksichtig werden, um den Spurwechsel zu initiieren. Zum Beispiel kann ermittelt werden, ob die Längsführung übertreten oder übersteuert ist. Dazu kann das Querführungsmodul 32a zum Beispiel einen Übersteuerungszustand des Längsführungsmoduls 31a ermitteln. Der Übersteuerungszustand gibt an, dass der Fahrer zum Beispiel in die Steuerung des Ego-Fahrzeugs 20 zur Durchführung eines Längsführungsmanövers eingreift. Nur dann, wenn kein Übersteuerungszustand vorhanden ist, wird die Freigabe für den assistierten Spurwechsel erteilt. Insbesondre wird auch überprüft, ob alle sonstigen relevanten Bedingungen für den Spurwechsel erfüllt sind. Dazu gehören zum Beispiel Bedingungen, die durch eine Verkehrsführung oder Verkehrshinweise, wie ein Überholverbot oder eine Geschwindigkeitsbegrenzung, vorgegeben sind.

Das beschriebene Verfahren kann zum Beispiel auch dann eingesetzt werden, wenn das Spurwechselmanöver 21 bereits eingeleitet ist oder wurde, sich das Ego-Fahrzeug 20 also zum Beispiel bereits im Spurwechsel befindet. Falls nun unerwartet ein Fremdfahrzeug auftaucht, das den ersten Sicherheitsabstand D1 verletzt, braucht das Spurwechselmanöver 21 nicht wie bisher abgebrochen und das Ego-Fahrzeug 20 auf die Ego-Spur 11 zurückbewegt werden. Stattdessen kann das zuvor beschriebene Verfahren durchgeführt werden. Dabei kann zum Beispiel überprüft werden, ob innerhalb eines vorangegangenen vorbestimmten Zeitintervalls, zum Beispiel von 1 bis 5 Sekunden, das Spurwechselmanöver 21 unter Einhaltung des Soll-Abstands mittels des Querführungsmoduls 32a eingeleitet wurde. Das Zeitintervall dient dabei zur Entprellung, sodass für das Längsführungsmodul 31a sozusagen eine Entscheidungszeit gewährt wird, um auf das unerwartet aufgetauchte Zielobjekt als Regelobjekt einzuregeln.

Insgesamt zeigen die Ausführungsbeispiele die Berücksichtigung eines Längsregelobjekts für Sicherheitsabstände beim assistierten oder automatisierten Spurwechsel. Insgesamt ist es so möglich, den Sicherheitsabstand zu übrigen Verkehrsteilnehmern im Straßenverkehr dynamisch einzustellen und dadurch weniger abrupte Fahrmanöver durchführen zu müssen. Dadurch kann das Wohlbefinden für Passagiere gesteigert werden. Außerdem kann so die Verfügbarkeit einer Spurwechselfunktion erhöht und das Vertrauen in die Funktion gesteigert werden.

### Bezugszeichenliste

- 10: Autobahn
- 11: Ego-Spur
- 12: Zielspur
- 13: weitere Fahrspur
- 14: Fremdfahrzeug
- 15: Fremdfahrzeug
- 20: Ego-Fahrzeug
- 21: Spurwechselmanöver
- 22: Trajektorie
- 23: Blinker
- 30: Travel Assist
- 31: Radarsystem
- 31a: Längsführungsmodul
- 31b: Radarsensor
- 32: Kamerasystem
- 32a: Querführungsmodul
- 32b: Umgebungskamera
- D1: erster Sicherheitsabstand
- D2: zweiter Sicherheitsabstand
- F: Fahrtrichtung
- N: Notbremsabstand
- S1 bis S6: Verfahrensschritte

## Patentansprüche

1. Verfahren zum zumindest teilweise automatisierten Durchführen eines Spurwechselmanövers (21) mit einem Kraftfahrzeug (20), folgenden Schritt umfassend:
- Ermitteln eines ersten Sicherheitsabstands (D1) des Kraftfahrzeugs (20) relativ zu einem für das Spurwechselmanöver (21) relevanten Zielobjekt (15) basierend auf Querführungsdaten eines Querführungsmoduls (32a) des Kraftfahrzeugs (20), welches das Spurwechselmanövers (21) durchführt,
**gekennzeichnet durch** die folgenden weiteren Schritte:
- Ermitteln eines Aktivierungszustands eines Längsführungsmoduls (31a) des Kraftfahrzeugs (20), welcher angibt, dass das Längsführungsmodul (31a) zum zumindest teilweise automatisierten Durchführen eines Längsführungsmanövers des Kraftfahrzeugs (20) aktiviert ist,
- Ermitteln zumindest eines Regelparameters, welcher angibt, dass das Längsführungsmodul (31a) das Zielobjekt (15) für das Längsführungsmanöver berücksichtigt,
- nur dann, wenn der Aktivierungszustand und der Regelparameter vorliegen: Ermitteln eines zweiten Sicherheitsabstands (D2) des Kraftfahrzeugs (20) relativ zu dem Zielobjekt (15), wobei der zweite Sicherheitsabstand (D2) vom ersten Sicherheitsabstand (D1) um einen vorbestimmen Grenzbetrag verschieden ist, und
- Durchführen des Spurwechselmanövers (21) unter Einhaltung des zweiten Sicherheitsabstands (D2) zu dem Zielobjekt (15) mittels des Querführungsmoduls (32a).

2. Verfahren nach Anspruch 1, wobei ein Spurwechselstatus des Querführungsmoduls (32a) ermittelt wird, wobei der Spurwechselstatus angibt, dass innerhalb eines vorangegangenen, vorbestimmten Zeitintervalls ein Durchführen des Spurwechselmanövers (21) unter Einhaltung des ersten Sicherheitsabstands (D1) zu dem Zielobjekt (15) mittels des Querführungsmoduls (32a) eingeleitet wurde, und der zweite Sicherheitsabstand (D2) zusätzlich nur dann ermittelt wird, wenn der Spurwechselstatus vorliegt.

3. Verfahren nach einem der vorhergehenden Ansprüche, wobei eine Eintrittswahrscheinlichkeit des Zielobjekts (15) in den zweiten Sicherheitsabstand (D2) ermittelt wird, und das Spurwechselmanöver (21) unter Einhaltung des zweiten Sicherheitsabstands (D2) nur dann durchgeführt wird, wenn die Eintrittswahrscheinlichkeit einen vorgegebenen Grenzwert unterschreitet.

4. Verfahren nach einem der vorhergehenden Ansprüche, wobei ein Übersteuerungszustand des Längsführungsmoduls (31a) ermittelt wird, welcher angibt, dass ein Passagier des Kraftfahrzeugs (20) durch einen Fahreingriff die Durchführung des Längsführungsmanövers mittels des Längsführungsmoduls (31a) zumindest teilweise übersteuert, und das Durchführen des Spurwechselmanövers (21) unter Einhaltung des zweiten Sicherheitsabstands (D2) verhindert wird, wenn der Übersteuerungszustand vorliegt.

5. Verfahren nach einem der vorhergehenden Ansprüche, wobei der zweite Sicherheitsabstand (D2) im Vergleich zu dem ersten Sicherheitsabstand (D1) um einen vorbestimmen Grenzbetrag reduziert ist.

6. Verfahren nach Anspruch 5, wobei beim Ermitteln des zweiten Sicherheitsabstands (D2) einen vorgegebener Notbremsabstand (N) zum Zielobjekt (15) für das Durchführen des Längsführungsmanöver berücksichtigt wird, wobei der Notbremsabstand einen Abstand zum Zielobjekt (15) angibt, der mindestens notwendig ist, damit ein Notbremsmodul mittels Notbremsmanöver eine Kollision mit dem Zielobjekt (15) noch verhindern kann.

7. Verfahren nach einem der vorhergehenden Ansprüche, wobei das Zielobjekt (15) ein Fremdfahrzeug (14, 15) auf einer Zielfahrspur (12) ist, auf die das Kraftfahrzeug (20) durch das Durchführen des Spurwechselmanövers (21) gelenkt werden soll.

8. Verfahren nach einem der vorhergehenden Ansprüche, wobei der jeweilige Sicherheitsabstand (D1, D2) abhängig von einer Fahrzeuggeschwindigkeit des Kraftfahrzeugs (20) und/oder des Zielobjekts (15) festgelegt wird.

9. Kraftfahrzeug (20) mit einem Querführungsmodul (32a) zum Durchführen eines Spurwechselmanövers (21) und einem Längsführungsmodul (31a) zum Durchführen eines Längsführungsmanövers und einer Steuerlogik, die eingerichtet ist zum Durchführen eines Verfahrens nach einem der vorhergehenden Ansprüche.

10. Kraftfahrzeug nach Anspruch 9, wobei das Kraftfahrzeug (20) ein Kamerasystem (32) zur Umgebungserfassung und ein Radarsystem (31) zur Umgebungserfassung umfasst, wobei das Kamerasystem (32) das Querführungsmodul (32a) umfasst und das Radarsystem (31) das Längsführungsmodul (31a) umfasst.

## Claims

1. Method for performing a lane change maneuver (21) with a motor vehicle (20), comprising the following step:
- Determining a first safety distance (D1) of the motor vehicle (20) relative to a target object (15) relevant for the lane change maneuver (21) based on lateral guidance data of a lateral guidance module (32a) of the motor vehicle (20), which performs the lane change maneuver (21),
**characterized by** the following further steps:
- Determining an activation state of a longitudinal guidance module (31a) of the motor vehicle (20), which indicates that the longitudinal guidance module (31a) is activated for at least partially automatically performing a longitudinal guidance maneuver of the motor vehicle (20),
- Determining at least one regulation parameter, which indicates that the longitudinal guidance module (31a) considers the target object (15) for the longitudinal guidance maneuver,
- only if the activation state and the regulation parameter are present: Determining a second safety distance (D2) of the motor vehicle (20) relative to the target object (15), wherein the second safety distance (D2) differs from the first safety distance (D1) by a predetermined limit value, and
- Performing the lane change maneuver (21) while maintaining the second safety distance (D2) to the target object (15) by means of the lateral guidance module (32a).

2. Method according to claim 1, wherein a lane change status of the lateral guidance module (32a) is determined, wherein the lane change status indicates that within a preceding, predetermined time interval carrying out the lane change maneuver (21) while maintaining the first safety distance (D1) to the target object (15) by means of the lateral guidance module (32a) was initiated, and the second safety distance (D2) is additionally determined only if the lane change status is present.

3. Method according to one of the preceding claims, wherein a probability of entry of the target object (15) into the second safety distance (D2) is determined, and the lane change maneuver (21) while maintaining the second safety distance (D2) is only performed if the probability of entry falls below a predetermined threshold.

4. Method according to one of the preceding claims, wherein an override state of the longitudinal guidance module (31a) is determined, which indicates that a passenger of the motor vehicle (20) at least partially overrides the performance of the longitudinal guidance maneuver by means of the longitudinal guidance module (31a) by a driving intervention, and the performing of the lane change maneuver (21) while maintaining the second safety distance (D2) is prevented if the override state is present.

5. Method according to one of the preceding claims, wherein the second safety distance (D2) is reduced compared to the first safety distance (D1) by a predetermined limit value.

6. Method according to claim 5, wherein when determining the second safety distance (D2), a predetermined emergency braking distance (N) to the target object (15) for performing the longitudinal guidance maneuver is considered, wherein the emergency braking distance indicates a distance to the target object (15) that is at least necessary for an emergency braking module to still prevent a collision with the target object (15) by means of an emergency braking maneuver.

7. Method according to one of the preceding claims, wherein the target object (15) is another vehicle (14, 15) on a target lane (12) to which the motor vehicle (20) is to be steered by performing the lane change maneuver (21).

8. Method according to one of the preceding claims, wherein the respective safety distance (D1, D2) is determined dependent on a vehicle speed of the motor vehicle (20) and/or of the target object (15).

9. Motor vehicle (20) with a lateral guidance module (32a) for performing a lane change maneuver (21) and a longitudinal guidance module (31a) for performing a longitudinal guidance maneuver and a control logic which is configured to perform a method according to one of the preceding claims.

10. Motor vehicle according to claim 9, wherein the motor vehicle (20) comprises a camera system (32) for environment perception and a radar system (31) for environment perception, wherein the camera system (32) comprises the lateral guidance module (32a) and the radar system (31) comprises the longitudinal guidance module (31a).

## Revendications

1. Procédé pour réaliser au moins partiellement un manœuvre de changement de voie (21) avec un véhicule automobile (20), comprenant les étapes suivantes :
- Détermination d'une première distance de sécurité (D1) du véhicule automobile (20) par rapport à un objet cible (15) pertinent pour la manœuvre de changement de voie (21), sur la base de données de guidage latéral d'un module de guidage latéral (32a) du véhicule automobile (20), qui réalise la manœuvre de changement de voie (21), **caractérisé par** les étapes supplémentaires suivantes :
- Détermination d'un état d'activation d'un module de guidage longitudinal (31a) du véhicule automobile (20), qui indique que le module de guidage longitudinal (31a) est activé pour réaliser au moins partiellement une manœuvre de guidage longitudinal du véhicule automobile (20),
- Détermination d'au moins un paramètre de régulation, qui indique que le module de guidage longitudinal (31a) tient compte de l'objet cible (15) pour la manœuvre de guidage longitudinal,
- uniquement si l'état d'activation et le paramètre de régulation sont présents : détermination d'une seconde distance de sécurité (D2) du véhicule automobile (20) par rapport à l'objet cible (15), la seconde distance de sécurité (D2) différant de la première distance de sécurité (D1) d'une valeur limite prédéterminée, et
- réalisation de la manœuvre de changement de voie (21) en respectant la seconde distance de sécurité (D2) par rapport à l'objet cible (15) à l'aide du module de guidage latéral (32a).

2. Procédé selon la revendication 1, dans lequel un état de changement de voie du module de guidage latéral (32a) est déterminé, l'état de changement de voie indiquant qu'une initiation d'une réalisation de la manœuvre de changement de voie (21) en respectant la première distance de sécurité (D1) par rapport à l'objet cible (15) à l'aide du module de guidage latéral (32a) a été initiée dans un intervalle de temps prédéterminé précédent, et la seconde distance de sécurité (D2) est déterminée uniquement si l'état de changement de voie est présent.

3. Procédé selon l'une des revendications précédentes, dans lequel une probabilité d'entrée de l'objet cible (15) dans la seconde distance de sécurité (D2) est déterminée, et la manœuvre de changement de voie (21) en respectant la seconde distance de sécurité (D2) n'est réalisée que si la probabilité d'entrée est inférieure à une valeur limite prédéfinie.

4. Procédé selon l'une des revendications précédentes, dans lequel un état de superposition du module de guidage longitudinal (31a) est déterminé, qui indique qu'un passager du véhicule automobile (20) prend le contrôle, par une intervention de conduite, de la réalisation de la manœuvre de guidage longitudinal à l'aide du module de guidage longitudinal (31a) au moins partiellement, et la réalisation de la manœuvre de changement de voie (21) en respectant la seconde distance de sécurité (D2) est empêchée si l'état de superposition est présent.

5. Procédé selon l'une des revendications précédentes, dans lequel la seconde distance de sécurité (D2) est réduite par rapport à la première distance de sécurité (D1) d'une valeur limite prédéterminée.

6. Procédé selon la revendication 5, dans lequel, lors de la détermination de la seconde distance de sécurité (D2), une distance de freinage d'urgence prédéfinie (N) par rapport à l'objet cible (15) pour la réalisation de la manœuvre de guidage longitudinal est prise en compte, la distance de freinage d'urgence indiquant une distance par rapport à l'objet cible (15) qui est au moins nécessaire pour qu'un module de freinage d'urgence puisse encore prévenir une collision avec l'objet cible (15) par le biais d'une manœuvre de freinage d'urgence.

7. Procédé selon l'une des revendications précédentes, dans lequel l'objet cible (15) est un autre véhicule automobile (14, 15) sur une voie cible (12), sur laquelle le véhicule automobile (20) doit être dirigé par la réalisation de la manœuvre de changement de voie (21).

8. Procédé selon l'une des revendications précédentes, dans lequel la distance de sécurité respective (D1, D2) est fixée en fonction d'une vitesse du véhicule automobile (20) et/ou de l'objet cible (15).

9. Véhicule automobile (20) avec un module de guidage latéral (32a) pour réaliser une manœuvre de changement de voie (21) et un module de guidage longitudinal (31a) pour réaliser une manœuvre de guidage longitudinal et une logique de commande configurée pour réaliser un procédé selon l'une des revendications précédentes.

10. Véhicule automobile selon la revendication 9, dans lequel le véhicule automobile (20) comprend un système de caméras (32) pour la perception de l'environnement et un système de radars (31) pour la perception de l'environnement, le système de caméras (32) comprenant le module de guidage latéral (32a) et le système de radars (31) comprenant le module de guidage longitudinal (31a).
